# EUROPÄISCHE PATENTSCHRIFT

(11) **EP 0 662 405 B1**
(45) Veröffentlichungstag und Bekanntmachung des Hinweises auf die Patenterteilung: **22.04.1998**
(21) Anmeldenummer: 94120096.6
(22) Anmeldetag: 19.12.1994
(51) Int. Cl.: B60P 1/44

(54) **Faltbare Hubplattform**
Collapsible lifting platform
Plate-forme de levage repliable

(30) Priorität: 08.01.1994 DE 4400361
(43) Veröffentlichungstag der Anmeldung: 12.07.1995
(73) Patentinhaber: Bär, Gerd, D-74078 Heilbronn (DE)
(72) Erfinder: Bär, Gerd, D-74078 Heilbronn (DE)
(74) Vertreter: Kinkelin, Ulrich, Dipl.-Ing.

(56) Entgegenhaltungen:
- BE-A- 905 515
- DE-A- 3 343 240
- DE-A- 3 420 422
- DE-A- 4 114 705
- DE-U- 7 636 780
- FR-A- 2 676 405
- GB-A- 2 207 113
- Prospekt Firma HYDRIS (Chateaubourg, France)

## Beschreibung

Die Erfindung bezieht sich auf eine Vorrichtung gemäß dem Oberbegriff des Anspruchs 1.

Die Ausdrücke "horizontal" und "senkrecht" sind als vereinfachende sprachliche Definitionen zu verstehen, die natürlich nur dann exakt zutreffen, wenn ein Fahrzeug, an dem die Vorrichtung angebracht ist, seinerseits auf einer genau horizontalen Ebene steht. Ebenso sind die Richtungsangaben "oben" und "unten" auf die Betriebslage der Vorrichtung bezogen. Im Allgemeinen werden Faltbordwände am Heck eines Fahrzeugs montiert und demgemäß bedeutet "vorne" bzw. "rückwärtig" in Fahrtrichtung gesehen vorne bzw. hinten. Dies schließt natürlich nicht aus, daß die Vorrichtung auch an einer Längsseite eines Fahrzeugs angebracht werden kann.

Der prinzipielle Aufbau läßt sich anhand einer nicht gattungsgemäßen Vorrichtung leichter veranschaulichen, die in der DE 33 43 240 A1 beschrieben ist. Hier ist der Hauptquerträger mittels zweier etwa vertikaler Parallelogrammlenkerpaare zwischen einer nach rückwärts ausgeschwenkten Arbeitsstellung und einer nach vorne eingeschwenkten Fahrstellung horizontal beweglich gelagert. Der Zweck dieser Horizontalverlagerung ist es, die eingefaltete Plattform während der Fahrt so zu verstauen, daß sie nicht hinderlich ist und nicht über die äußere Fahrzeugkontur vorsteht. Die Lagerung mittels Parallelogrammlenkern und deren Schwenkantrieb ist konstruktiv völlig problemlos. Die Schwenklager beispielsweise können mit bewährter Technik dauergeschmiert und hochbelastbar ausgebildet werden.

Um eine genügend große Horizontalwirkung zu erzielen, müssen die vertikalen Parallelogrammlenker eine gewisse Mindestlänge haben, was bei den zunehmend immer niedriger werdenden Abständen zwischen Fahrbahn und Boden des Fahrzeugaufbaus moderner Lastkraftwagen nicht mehr zu realisieren ist. Deshalb wird statt der Schwenklagerung eine Schiebelagerung gesucht.

Eine gattungsgemäße Vorrichtung mit Schiebelagerung ist beispielsweise in einem Prospekt der Firma HYDRIS (Chateaubourg, France) dargestellt. Hier dienen zwei speziell ausgebildete teleskopische Hydraulikzylinder zugleich als Antrieb und Schiebelager, indem ein äußerer Zylinder als Schlittenkörper fungiert und unmittelbar im Führungskanal verschiebbar gelagert ist. Der Führungskanal hat dementsprechend einen kreisrunden Querschnitt. Die beidseits des Eintrittsschlitzes liegenden Führungsflächen sind daher konkav zur Seite und nach oben gewölbt und der kreiszylindrische Schlittenkörper drückt folglich in der Weise auf die Führungsflächen, daß das Führungsprofil nach Art eines Keiles aufgespreizt wird. Die Führungsprofile sind als Rohre in einem untenliegenden Eintrittsschlitz ausgebildet, die stirnseitig an Konsolen eines die Rohre längs übergreifenden Haltewinkels befestigt sind. Um ein Verkanten der Schiebeführung zu vermeiden, müssen beide Hydraulikzylinder durch eine aufwendige Hydrauliksteuerung im Gleichlauf gehalten werden. In der Fahrstellung ist die Plattform nicht besonders gesichert.

Aus der BE-A-905 515 ist eine Vorrichtung bekannt geworden, die eine Schiebelagerung analog der Vorrichtung der Firma HYDRIS aufweist. Abweichend hierzu ist der Antrieb über einen außerhalb der Schiebelagerung angeordneten Hydraulikzylinder, der über ein Halteelement mit der Schiebelagerung gekoppelt ist. Diese Vorrichtung weist ebenfalls die Nachteile der oben beschriebenen Ausführungsform der Firma HYDRIS auf.

Aufgabe der Erfindung ist es, eine Vorrichtung der gattungsgemäßen Art zu schaffen, die eine zuverlässigere Schiebelagerung, eine einfachere Montage, einen preiswerteren und problemlosen Schiebeantrieb ermöglicht.

Diese Aufgabe wird hinsichtlich der Schiebelagerung gelöst durch die kennzeichnenden Merkmale des Anspruchs 1.

Dadurch, daß der Schlittenkörper mit dem Führungsprofil nach der Art eines Spannkeiles zusammenwirkt, kann sich das Führungsprofil bei Belastung nicht mehr aufweiten. Es kann einerseits schwächer und raumsparender dimensioniert werden und andererseits verändern sich die aufeinanderliegenden Flächen von Führungskanal und Schlittenkörper nicht mehr im Sinne einer Verschlechterung der Flächenpressung, was eine höhere Konstanz der Lagerqualität und eine größere Lebensdauer der Schiebeführung bedeutet.

Die Ausgestaltung nach Anspruch 4 ermöglicht eine problemlose Befestigung am Fahrzeug, weil die Verankerung an beliebigen Längspositionen des Führungsprofils angebracht werden kann. Das Prinzip des Spannkeiles wird gemäß Anspruch 6 vorteilhafterweise auch für die Befestigung eingesetzt.

Die Weiterbildung nach Anspruch 7 eröffnet die Möglichkeit, das Führungsprofil auch an schrägen Wänden eines Fahrzeugchassis exakt winkelmäßig ausgerichtet zu befestigen.

Gemäß Anspruch 8 können Dichtlippen in unmittelbarer Nähe des Eintrittsschlitzes angebracht werden, wodurch das Eindringen von Schmutz erheblich erschwert wird.

Die angeformte Leiste nach Anspruch 9 hat mehrere Funktionen. Zum einen dient sie als Verankerungsbereich für Quertraversen nach Anspruch 14, zum anderen dient sie als Verankerungsbereich für eine Zahnstange eines Gleichlaufgetriebes nach Anspruch 26 und schließlich dient sie als Leitfläche im Zusammenhang mit dem richtigen Positionieren und Festlegen der eingefalteten Plattform in der Fahrstellung gemäß Anspruch 30.

Die Ausbildung der Antriebsvorrichtung nach Anspruch 24 hat den Vorteil, daß ein einziger und zudem ganz einfacher, serienmäßiger Hydraulikzylinder verwendet werden kann, denn dessen relativ große Länge (entsprechend dem Verschiebeweg) ist in der angegebenen Position kein Hindernis. Er kann irgendwo zwischen den Führungsprofilen angeordnet werden, also nicht notwendigerweise in der Mitte. Dabei ist der Stützarm zweckmäßigerweise an der (in Fahrtrichtung) vordersten Quertraverse befestigt, womit die Schiebeführung mitsamt Antrieb als betriebsbereit vormontierte Einheit ausgeliefert werden kann.

Die Ausbildung der Vorrichtung nach Anspruch 28 bewirkt eine Art Zwangsführung, die sicherstellt, daß die eingefaltete Plattform in ihre ordnungsgemäße Fahrstellung gelangt, auch wenn die Höhenlage über die Parallelogrammlenker nicht ganz exakt eingestellt wurde.

Die Weiterbildung nach Anspruch 29 ergibt eine elastische Einspannung der Plattform in der Fahrstellung. Dies verhindert einerseits das störende akustische Klappern der Plattformteile und schont andererseits auch die Lagerstellen, insbesondere die der Schiebeführung, weil schlagartige Stöße abgefangen werden.

Weitere vorteilhafte Ausgestaltungen und Weiterbildungen der Erfindung ergeben sich aus den zuvor nicht besonders genannten Unteransprüchen, sowie der nachfolgenden Beschreibung eines in der Zeichnung dargestellten Ausführungsbeispiels.

Es zeigt:
- Fig.1: eine schematisch vereinfachte Seitenansicht des Hecks eines Lastkraftwagens mit einer Vorrichtung gemäß der Erfindung, wobei der Hauptquerträger in die Ausfaltstellung zurückgeschoben ist,
- Fig.2: die Vorrichtung von Fig.1 etwas vergrößert, wobei der Hauptquerträger etwa bis zur Hälfte des Vorschubs in Richtung Fahrstellung eingeschoben ist,
- Fig.3: einen Querschnitt gemäß der Ebene 3-3 aus Fig.2.

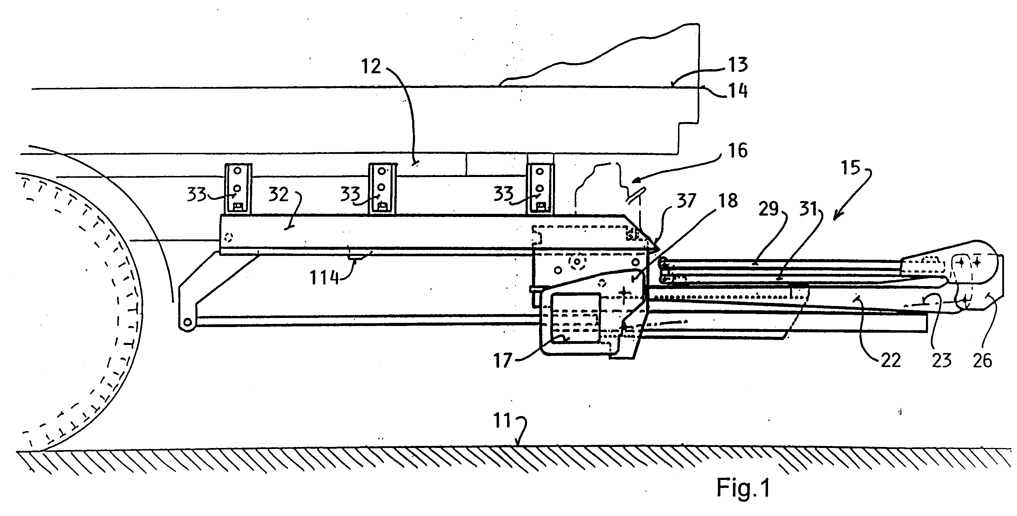

Gemäß Fig.1 steht auf einer Fahrbahn 11 ein Lastkraftwagen, von dem nur das Heck in schematisch stark vereinfachter Weise gezeichnet ist. Der Fahrzeugaufbau hat einen nur angedeuteten Fahrgestellrahmen und einen Hilfsrahmen mit zwei beidseits der Fahrzeuglängsachse parallel zueinander und horizontal liegenden Längsträgern 12. Oberhalb der Längsträger 12 befindet sich der Boden 13, auf dem die Ladegüter abgestellt werden. Der Boden 13 hat eine Hinterkante 14, an die eine Plattform einer Faltbordwand 15 anschließt, wenn sie sich in ihrer oberen Arbeitsposition befindet. Unterhalb des Bodens 13 ist eine Anhängerkupplung 16 angedeutet.

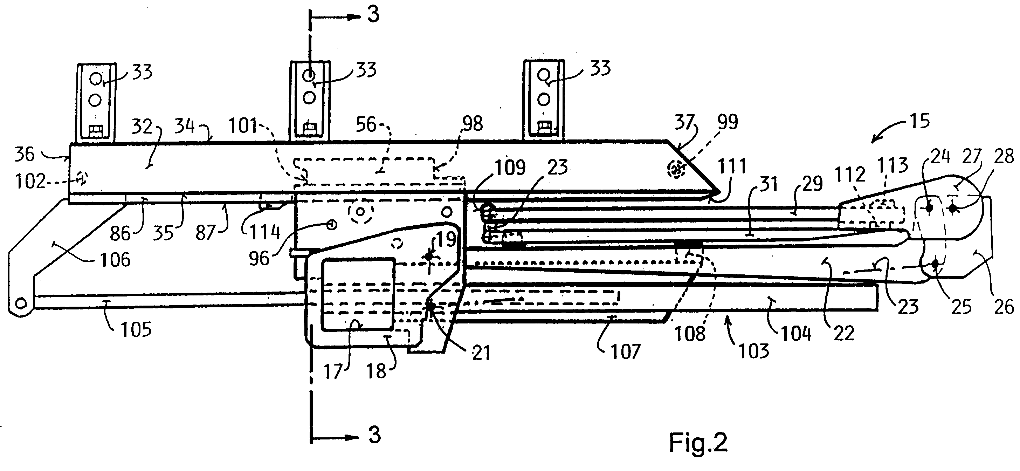

Die Faltbordwand 15 ist von an sich bekannter Art und braucht daher nur grob beschrieben zu werden. Sie besteht gemäß Fig.1 und 2 aus einem Hauptquerträger 17, der ein stabiles Hohlprofil ist und sich etwa über die ganze Breite des Fahrzeugaufbaus erstreckt. Er ist in nachfolgend näher beschriebener Weise unterhalb der Längsträger 12 horizontal und quer zur Fahrzeuglängsachse ausgerichtet gelagert. An den beiden Endbereichen des Hauptquerträgers 17 ist je ein Lenkerkopf 18 angebracht, an deren rückwärtigen Kanten mit Gelenkachsen 19, 21 je ein oberer Parallelogrammlenker 22 und ein unterer Parallelogrammlenker 23, von dem der besseren Übersicht wegen nur die Wirkungslinie strichpunktiert angedeutet ist, schwenkbar angelenkt sind. Die anderen Enden der Parallelogrammlenker 22, 23 tragen über Gelenkachsen 24, 25 einen Anschlußkopf 26, an dem wiederum beidseits deckungsgleich ausgerichtete Lagerplatten 27 über eine horizontale Gelenkachse 28 schwenkbar gelagert sind. Die Lagerplatten 27 sind an den gegenüberliegenden Außenkanten eines Plattformteiles befestigt, das Festteil 29 genannt wird, obgleich es um die Gelenkachse 28 aus der dargestellten Fahrstellung in eine um 180° nach hinten ausgeschwenkte Arbeitsstellung verschwenkt werden kann. Am zur Gelenkachse 28 gegenüberliegenden Ende des Festteils 29 ist ein weiteres Plattformteil, das Faltteil 31, über Doppelgelenke 23 angeschlossen. Es kann aus der dargestellten gefalteten Fahrstellung in eine entfaltete Arbeitsstellung geschwenkt werden, in der das Faltteil 31 und das Festteil 29 im wesentlichen eine zusammenhängende ebene Plattform bilden. Mittels an sich bekannter und daher hier nicht besonders dargestellter Hydraulikzylinder werden die Parallelogrammlenker 22, 23 auf und ab geschwenkt, wodurch die in die Arbeitsstellung ausgefaltete Plattform zwischen dem Niveau der Fahrbahn 11 und dem Niveau des Bodens 13 verlagert werden kann.

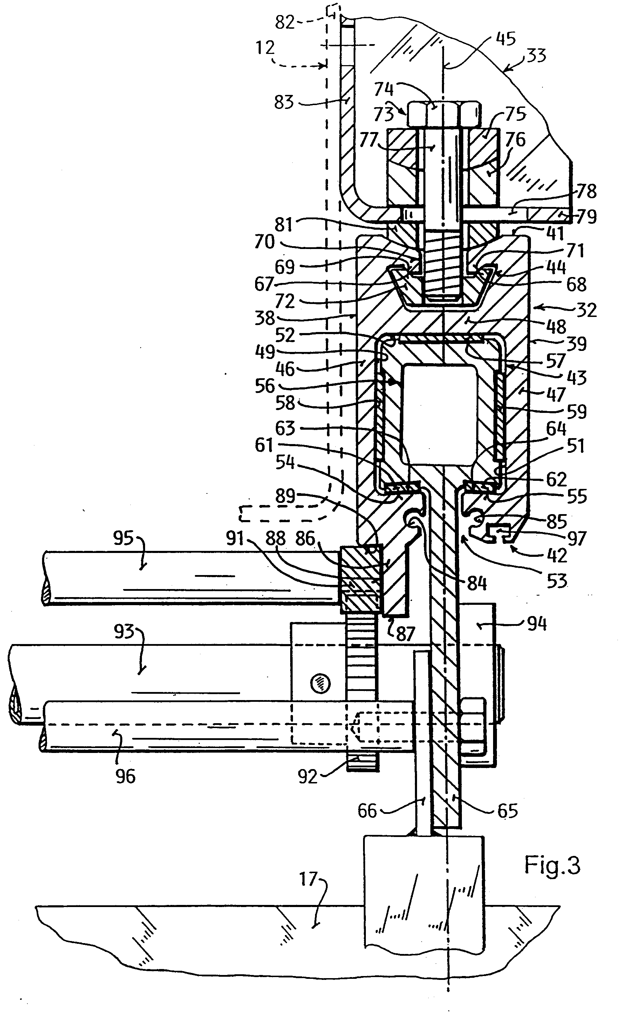

Oberhalb der Endbereiche des Hauptquerträgers 17, jedoch zwischen den Lenkerköpfen 18, sind unterhalb des Bodens 13 an den Längsträgern 12 zwei Führungsprofile 32 mittels mehrerer Befestigungskonsolen 33 angebracht. Die Führungsprofile 32 haben in der Seitenansicht der Fig.1 und 2 eine langgestreckte Gestalt, mit einer geraden horizontalen Oberkante 34, einer dazu parallelen Unterkante 35, einer (in Fahrtrichtung des Fahrzeugs gesehen) vorderen vertikalen Kante 36 und einer rückwärtigen schräg von der Oberkante 34 aus nach hinten abfallenden Abschlußkante 37, die gemäß Fig.1 bewirkt, daß der Schwenkbereich einer hier nicht gezeichneten Anhängerdeichsel, die in der Anhängerkupplung 16 eingehängt ist, durch die Führungsprofile 32 nicht begrenzt wird, obwohl die Unterkante 35 der Führungsprofile 32 noch über die Anhängerkupplung 16 hinaus ragt. Die Abschlußkante 37 ist vorzugsweise etwa 45° gegenüber der Horizontalen geneigt, beziehungsweise schließt mit der Oberkante 34 einen stumpfen Winkel von etwa 135° ein. Die Längsachsen der Führungsprofile 32 sind im Rahmen der üblichen Montagegenauigkeiten im wesentlichen horizontal und senkrecht zum Hauptquerträger 17 ausgerichtet und die beiden Führungsprofile 32 sind in der Seitenansicht der Fig.1 und 2 deckungsgleich, jedoch bezüglich einer vertikalen Längsmittenebene des Fahrzeugs spiegelsymmetrisch zueinander ausgebildet und angeordnet. Es wird daher nachfolgend anhand der Fig.3 nur eines der Führungsprofile 32 stellvertretend näher beschrieben.

Das Führungsprofil 32 besteht aus eloxiertem Aluminium und hat gemäß Fig.3 einen im wesentlichen rechteckigen Außenumriß, mit einer inneren vertikalen Seitenkante 38 und einer dazu parallelen äußeren Seitenkante 39, einer schmalen Oberkante 41 und einer in noch näher zu bezeichnender Art gegliederten Unterkante 42. Der Querschnitt ist durch einen unteren Führungskanal 43 und einen oberen Längskanal 44 , die beide im wesentlichen symmetrisch zu einer gemeinsamen Vertikalebene 45 ausgebildet sind, etwa H-förmig ausgebildet, wobei ein an die innere Seitenkante 38 anschließender innerer Vertikalschenkel 46 und ein an die äußere Seitenkante 39 anschließender äußerer Vertikalschenkel 47 über einen kurzen Horizontalschenkel 48 verbunden sind, der zwischen Führungskanal 43 und Längskanal 44 liegt. Der Querschnitt insgesamt ist nicht symmetrisch bezüglich der Vertikalebene 45.

Der Führungskanal 43 hat einen im wesentlichen rechteckigen Querschnitt, wobei die Querschnittskanten der seitlichen Wandsektoren 49, 51 gerade, symmetrisch und im wesentlichen parallel zur Vertikalebene 45 ausgerichtet sind. Die Querschnittskante des oberen Wandsektors 52 ist gerade und senkrecht zur Vertikalebene 45 ausgerichtet. Der untere Wandsektor ist durch einen nach unten offenen Eintrittsschlitz 53 in zwei symmetrisch zur Vertikalebene 45 liegende Führungsflächen 54, 55 unterteilt, deren Querschnittskanten unmittelbar im Anschluß an den Eintrittsschlitz 53 gerade und in einem Neigungswinkel kleiner als 90° symmetrisch zur Vertikalebene 45 ausgerichtet sind. Die Führungsflächen 54, 55 fallen somit mit zunehmendem Abstand von der Vertikalebene nach unten ab.

Im Führungskanal 43 ist ein den Kanalquerschnitt etwa ausfüllender Schlittenkörper 56 aus Aluminium-Strangpreßprofil in Profillängsrichtung verschiebbar gelagert, wobei an seinem Umfang zur Reibungs- und Verschleißminderung streifenförmige Gleitzwischenlagen 57, 58, 59, 61 und 62 angebracht, insbesondere angeklebt sind. So bilden die zwei symmetrisch zur Vertikalebene 45 und ebenfalls im vorgenannten Neigungswinkel angeordneten unteren Gleitzwischenlagen 61, 62 Gleitflächen 63, 64, die auf den Führungsflächen 54, 55 aufliegen.

Am Schlittenkörper 56 ist eine nach unten durch den Eintrittsschlitz ragende Aufhängeplatte 65 angeformt, die in hier nicht näher dargestellter Weise mit einem Befestigungsflansch 66 verschraubt oder sonstwie verbunden ist, der seinerseits am Hauptquerträger 17 befestigt ist. Da die Aufhängeplatte 65, wenn sie einstückig mit dem Schlittenkörper 56 hergestellt wird, aus Aluminium besteht, der Hauptquerträger 17 jedoch im allgemeinen aus Stahl besteht, ist eine unmittelbare Schweißverbindung nicht realisierbar. Es ist daher eine schraubbare Verbindung vorzusehen, die beispielsweise in der Art ausgeführt werden kann, wie dies in der DE 41 14 705 A1 beziehungsweise der GB 2 255 766 A näher erläutert wird.

Da auf diese Weise zwei solcher Aufhängeplatten 65 an den beiden Endbereichen des Hauptquerträgers 17 zwischen den Lenkerköpfen 18 befestigt sind und jeweils in einem Führungsprofil 32 längsverschiebbar mittels der Schlittenkörper 56 gelagert sind, kann der Hauptquerträger 17 zusammen mit der daran anmontierten Faltbordwand 15 horizontal verschoben werden. Das Gewicht der lasttragenden Faltbordwand 15 drückt die beiden Gleitflächen 63, 64 jedes Schlittenkörpers 56 auf die Führungsflächen 54, 55 der Führungsprofile 32, wobei durch die pfeilartig zur Vertikalebene 45 geneigte Ausrichtung dieser Flächen die beidseits der Eintrittsschlitze 53 befindlichen Vertikalschenkel 46, 47 der Führungsprofile 32 gegeneinander gezogen werden. Dies heißt natürlich nicht, daß hier eine sichtbare Zangenbewegung auftritt, denn die Zusammenziehung wird dadurch begrenzt beziehungsweise unterbunden, indem sich die seitlichen Wandsektoren 49, 51 der Führungskanäle 43 an die seitlichen Gleitzwischenlagen 58, 59 anpressen. Dabei wird der Neigungswinkel gerade so gewählt, daß bei der im Schiebebetrieb maximal auftretenden Belastung diese Anpressung noch nicht zu groß ist, um ein problemloses Verschieben der Schlittenkörper 56 zu behindern. Der Neigungswinkel kann als Richtwert zwischen etwa 84 und 88° betragen.

Der obere Wandsektor des Längskanals 44 jedes Führungsprofils 32 ist ebenfalls durch einen randoffenen Schlitz 70 in zwei symmetrisch zur Vertikalebene 45 liegende Auflageflächen 67, 68 unterteilt, an denen Klemmflächen 69, 71 einer länglichen Klemmschiene 72 anlegbar sind. Die Auflageflächen 67, 68 und die Klemmflächen 69, 71 sind zumindest bereichsweise (also nicht notwendigerweise über deren gesamte Breite) in einem mit zunehmendem Abstand von der Vertikalebene 45 ansteigenden Keilwinkel ausgerichtet, derart, daß eine vertikal über eine Befestigungsschraube 73 eingeleitete Klemmkraft die beidseits des Schlitzes 70 befindlichen Vertikalschenkel 46, 47 des Führungsprofils 32 gegeneinander zieht. Die Befestigungsschraube 73 stützt sich mit ihrem Kopf 74 auf einem Paket von zwei Zwischenleisten 75, 76 ab, durchquert mit ihrem Schaft 77 fluchtende Bohrungen dieser Zwischenleisten 75, 76, einen Querschlitz 78 in einem Horizontalschenkel 79 einer Befestigungskonsole 33, eine Bohrung einer weiteren Zwischenleiste 81, den Schlitz 70 und ist schließlich in eine Gewindebohrung der Klemmschiene 72 eingeschraubt. Die Oberkante 41 des Führungsprofils 32 ist konkav gekrümmt, so daß die Oberfläche als Zylindermantelabschnitt ausgebildet ist, dessen Zylinderachse oberhalb des Führungsprofils in der Vertikalebene 45 liegt. Die Unterfläche der Zwischenleiste 81 ist korrespondierend dazu ebenfalls als Zylindermantelabschnitt ausgebildet, so daß sich die Zwischenleiste 81 um die gemeinsame Zylinderachse verschwenken läßt. Eine ähnliche Gestaltung der Berührungsflächen der Zwischenleisten 75, 76 als Zylindermantelabschnitte gewährleistet eine vollflächige Abstützung der Klemmkraft der Befestigungsschraube 73 auch dann, wenn der Horizontalschenkel 79 der Befestigungskonsole 33 nicht genau senkrecht zur Vertikalebene 45 des Führungsprofils 32 ausgerichtet ist. Damit können also Ungenauigkeiten in der Ausrichtung der Seitenwände 82 der Längsträger 12 ausgeglichen werden. Es ist anzumerken, daß die vorstehende Anordnung schematisch vereinfacht dargestellt ist. So ist beispielsweise die Klemmschiene 72 entgegen der Zeichnung vorzugsweise etwa T-förmig profiliert, so daß der Mittelsteg durch den Schlitz 70 hochragt und dadurch die Gewindebohrung eine größere Länge erhält. Längs des Längskanals 44 sind mehrere (beispielsweise drei) solcher Befestigungskonsolen 33 verteilt angeordnet und in der beschriebenen Weise mit dem entsprechenden Führungsprofil 32 verbunden. Zufolge des durchgehenden Längskanals 44 können die Befestigungskonsolen 33 in beliebigen Positionen angebracht werden und so etwaigen Schrauben und Nieten an den Längsträgern 12 ausweichen. Die Vertikalschenkel 83 der Befestigungskonsolen 33 sind, wie angedeutet, an der Seitenwand 82 anliegend angeschraubt. Das Führungsprofil kann aber auch unmittelbar an der Unterseite einer Querstrebe anliegend angebracht werden, die zwischen den Längsträgern 12 befestigt wird. In dem Fall werden keine Befestigungskonsolen 33 benötigt.

Das Führungsprofil 32 weist im Bereich der unteren Ausmündung des Eintrittsschlitzes 53 beidseits der Vertikalebene 45 angeordnete hinterschnittene Fassungsnuten 84, 85 zur Aufnahme von den Eintrittsschlitz 53 abdeckenden Dichtlippen auf, die hier der besseren Übersicht wegen nicht besonders dargestellt sind. Die Vorderkante und Hinterkante der Aufhängeplatte 65 ist in nicht besonders dargestellter Weise zumindest im Höhenbereich der Dichtlippen nach Art eines Schiffsbugs oder eines in einem Fluß stehenden Brückenpfeilers gestaltet, so daß die Dichtlippen sanft und kontinuierlich beim Verschieben der Aufhängeplatten 65 an deren Außenflächen anliegend entlanggleiten und vor allem Spaltöffnungen vermieden werden.

Am unteren Innenrand des Führungsprofils 32 ist eine nach unten ragende Leiste 86 angeformt, die eine untere, senkrecht zur Vertikalebene 45 ausgerichtete Leitfläche 87 und eine parallel zur Vertikalebene 45 ausgerichtete, von dieser wegweisende Anlagefläche 88 aufweist. Die Anlagefläche 88 ist zweckmäßigerweise stufenartig gegenüber der inneren Seitenkante 38 des Führungsprofils 32 versetzt, so daß noch eine zur Leitfläche 87 parallele Stufenfläche 89 entsteht.

An der Anlagefläche 88 und der Stufenfläche 89 der Leiste 86 anliegend ist eine Zahnstange 91 befestigt, die sich über einen wesentlichen Teil der Länge des Führungsprofils 32 erstreckt und deren Zähne nach unten weisen, jedoch nicht nach unten über die Leitfläche 87 vorstehen. Mit den Zähnen der Zahnstange 91 kämmt ein Zahnrad 92, das drehfest auf einer Horizontalwelle 93 befestigt ist, die mit einem Ende an der Aufhängeplatte 65 mittels eines Wellenlagers 94 drehbar gelagert ist. Da sich in spiegelbildlicher Anordnung am gegenüberliegenden Führungsprofil (das nicht dargestellt ist) eine ebensolche Zahnstange befindet, mit der ein zweites Zahnrad kämmt, das ebenfalls drehfest auf der Horizontalwelle 93 befestigt ist, entsteht dadurch ein Gleichlaufgetriebe einfacher Bauart, das eine synchrone Zwangsverschiebung der in den beiden Führungsprofilen gelagerten Schlittenkörper bewirkt, wodurch Verkantungen vermieden werden.

Die deckungsgleich mit Abstand nebeneinanderliegenden Führungsprofile 32 werden vorzugsweise schon vor deren Anbringung an den Längsträgern 12 mittels zumindest zweier endseitig befestigter Quertraversen 95 rahmenartig miteinander verbunden. Dabei kann eine Quertraverse 95 mit ihren Stirnflächen an den Zahnstangen 91 anliegen oder aber unmittelbar an den Anlageflächen 88 der Leisten 86 anliegend angeschraubt werden.

Auch die Aufhängeplatten 65 werden über zumindest zwei Querstangen 96 rahmenartig miteinander verbunden. Vorzugsweise werden drei Querstangen 96 in der Seitenansicht nach Art eines Dreibeins verteilt angebracht, um die Aufhängeplatten 65 in räumlich möglichst starrer Anordnung zueinander zu halten.

Der Hauptquerträger 17 mit der daran gelagerten (an sich bekannten) Faltbordwand 15 sowie mit den daran befestigten Aufhängeplatten 65 und den damit verbundenen Schlittenkörpern 56, die in den Führungskanälen 43 der Führungsschienen 32 gehalten werden, bilden somit eine vormontierte Einheit, die lediglich unter die Längsträger 12 geschoben, in die Einbauhöhe angehoben und dann daran angeschraubt wird. Es versteht sich, daß auch die zur Faltbordwand gehörigen Hydraulikaggregate vormontiert sein können.

Am unteren Außenrand des Führungsprofils 32 ist gemäß Fig.3 eine hinterschnittene Haltenut 97 für eine nicht besonders dargestellte Vierkantmutter ausgebildet. Damit können in stufenlos variierbaren Längspositionen Sensoren oder Steuermagnete befestigt werden, mit denen die Verschiebepositionen der Schlittenkörper 56 abgetastet werden.

Zufolge der Quertraversen 95 erhalten die inneren Vertikalschenkel 46 der gegenüberliegenden Führungsprofile 32 eine gegenseitige versteifende Abstützung, sodaß die Wandstärke der inneren Vertikalschenkel 46 geringer sein kann als die Wandstärke der äußeren Vertikalschenkel 47.

Wie die Fig.2 zeigt, hat der Schlittenkörper 56 in der Seitenansicht eine zwar etwa rechteckige Gestalt, jedoch rückwärts einen stufenförmig abgesetzten Endbereich, wobei die untere horizontale Längsseite, welche die Gleitflächen 63, 64 (Fig.3) aufweist, gerade ist. An die obere horizontale gerade Längsseite, die zumindest über einen Teil ihrer Länge mittels der oberen Gleitzwischenlage 57 am oberen Wandsektor 52 (Fig.3) des Führungskanals 43 abgestützt wird, schließt sich eine dazu senkrechte Stufenfläche 98 an, die gegen ein Anschlagelement 99 anlegbar ist, das im Führungsprofil 32, den Führungskanal 43 am rückwärtigen Ende querend gelagert ist. Vorzugsweise ist das Anschlagelement 99 etwas elastisch federnd befestigt oder in sich elastisch, so daß Stöße gemildert werden.

Der Schlittenkörper 56 hat auch vorne eine senkrecht stehende Anschlagfläche 101, die gegen einen zweiten Anschlagbolzen 102 anlegbar ist, der im Führungsprofil 32, den Führungskanal 43 am vorderen Ende querend gelagert ist.

Als Antriebsvorrichtung zum Verschieben des Hauptquerträgers 17 dient ein doppeltwirkender Hydraulikzylinder 103. Der Hauptquerträger 17 hat dazu eine ihn etwa in der Mitte horizontal querende Öffnung, wobei der Zylinder 104 an der Vorderwand des Hauptquerträgers 17 in nicht näher dargestellter Weise fest angebracht ist und durch die Öffnung hindurch horizontal nach hinten ragt. Die Kolbenstange 105 ist mit ihrem freien Ende an einem vertikalen Stützarm 106 angelenkt, der an der vordersten Quertraverse 95 befestigt ist. Damit ist die Kolbenstange 105 kräftemäßig mit den Führungsprofilen 32 verbunden. Im Fahrzustand ist die Kolbenstange 105 in den Zylinder 104 eingezogen und daher gegen Verschmutzung geschützt. Dank des zuvor schon beschriebenen Gleichlaufgetriebes genügt als Antrieb ein einziger Hydraulikzylinder 103, der auch in einer seitlichen Position angeordnet werden kann.

Wie die Fig.2 zeigt, ist am Hauptquerträger 17 mittig eine nach rückwärts abstehende Stütze 107 fest angebracht, an deren freiem Ende ein nach oben ragender Gummipuffer 108 angeordnet ist, der in der gezeichneten gefalteten Stellung der Plattform etwa den Mittelbereich des Faltteiles 31 stützt. Der Mittelbereich in dem Sinne kann sich auch so weit nach hinten erstrecken, wie dies in Fig.2 der Position der Bezugszahl 29 entspricht. An den beiden Seiten des Festteiles 29 sind in den vorderen Endbereichen jeweils etwas nach oben ragende Führungsrollen 109 drehbar gelagert, die beim horizontalen Einfahren der Plattform (wie in Fig.2 ersichtlich) an den Leitflächen 87 der an den Führungsprofilen 32 angeformten Leisten 86 entlangrollen. Da die Führungsrollen 109 und der Gummipuffer 108 in Längsrichtung gegeneinander versetzt sind, entsteht eine Hebelwirkung, die den Anschlußkopf 26 in die richtige Höhenposition hochzieht, wenn er vor dem Einfahren nicht ausreichend genau mittels des Hubantriebs in die Einfahr-Höhenposition gestellt wurde. Um diesen Ausrichtvorgang zu erleichtern, ist die Leitfläche 87 am hinteren Ende gemäß der Seitenansicht von Fig.2 nach oben ansteigend abgeschrägt. Dies ergibt eine Einlaufschräge 111.

Zwischen dem freien Endbereich des Faltteiles 31 und dem gegenüberliegenden Festteil 29 (also in der Nähe der Gelenkachse 28) ist ein Gummipolster 112 angebracht und am Festteil 29 sind in etwa derselben Längsposition seitliche Stützrampen 113 nach oben abstehend angebracht, die beim Einfahren in die Fahrstellung ebenfalls wie die Führungsrollen 109 an den Leitflächen 87 anliegen. Allerdings gleiten sie nur ein sehr kurzes Stück an den Leitflächen 87 entlang, so daß man hier keine reibungsmindernden Rollen braucht. Weiterhin sind an den Leisten 86 noch Nocken 114 angebracht, die nach unten etwas über die Leitflächen 87 vorstehen. Sie befinden sich in einer solchen Längsposition, daß die Führungsrollen 109 dann an den Nocken 114 anliegen und damit gegenüber den Leitflächen 87 etwas nach unten weggedrückt werden, wenn die Schlittenkörper 56 die Fahrstellung erreicht haben. In dem Zustand wird also die Vorderkante des eingefalteten Plattformpakets etwas nach unten gedrückt und da sein Mittelbereich auf dem Gummipuffer 108 aufliegt, wird die Hinterkante des Plattformpakets nach Art eines zweiarmigen Hebels etwas nach oben gedrückt. Da aber dann die Stützrampen 113 an den Leitflächen 87 anliegen, werden das Gummipolster 112 und der Gummipuffer 108 elastisch verspannt. Die Faltplattform ist daher in der Fahrstellung festgeklemmt, so daß während des rauhen Fahrbetriebs keine losen Teile klappern und aneinanderstoßen. Es können auch die Stützrampen 113 aus einem etwas elastischen Kunststoff bestehen.

Wie die Fig.1 zeigt, kann der Hauptquerträger 17 ausreichend weit nach hinten verlagert werden, damit dann die Faltbordwand 15 problemlos an der Hinterkante 14 oder sonstigen Aufbauteilen vorbei aufgefaltet werden kann. Die Arbeitsstellung, in der der Anschlußkopf 26 an die Hinterkante 14 des Bodens 13 anschließen muß, erfordert dann wieder ein Vorschieben des Hauptquerträgers 17 in eine Zwischenposition.

Nicht besonders dargestellt ist eine Ausgestaltung, wonach die Stütze 107 zugleich auch als Schutzmantel für den Zylinder 104 ausgebildet ist. Dementsprechend ist die Stütze 107 länger als gezeichnet und umschließt den Zylinder 104 zumindest oben und an den beiden Seiten.

## Patentansprüche

1. Vorrichtung für eine Faltbordwand (15), **mit folgenden bekannten Merkmalen :**
a) an beiden Endbereichen eines Hauptquerträgers (17) ist je ein Lenkerkopf (18) angebracht;
b) an den beiden Lenkerköpfen (18) sind vier Parallelogrammlenker (22) schwenkbar angelenkt, die anderenendes eine faltbare Plattform halten, derart, daß deren Oberseite bis auf die Oberseite des Bodens (13) eines Fahrzeugaufbaus hochschwenkbar ist, wenn die Plattform in der entfalteteten Arbeitsstellung ist, und daß die Plattform in der gefalteten Fahrstellung unterhalb des Bodens (13) verstaubar ist;
c) oberhalb der Endbereiche des Hauptquerträgers (17), jedoch zwischen den Lenkerköpfen (18), sind zwei Führungsprofile (32) unterhalb des Bodens (13) des Fahrzeugaufbaus anbringbar, deren Langsachsen im wesentlichen horizontal und senkrecht zum Hauptquerträger (17) ausgerichtet sind ;
d) jedes Führungsprofil (32) hat einen Führungskanal (43) mit einem unteren Wandsektor und einem gegenüberliegenden oberen Wandsektor (52), sowie zwei beidseits einer Vertikalebene einander gegenüberliegenden seitlichen Wandsektoren (49, 51), wobei der untere Wandsektor durch einen nach unten offenen Eintrittsschlitz (53) in zwei symmetrisch zur Vertikalebene (45) liegende Führungsflächen (54, 55) unterteilt ist;
e) an den beiden Endbereichen des Hauptquerträgers (17) sind zwischen den Lenkerköpfen (18) zwei nach oben durch den Eintrittsschlitz (53) jeweils eines Führungsprofiles (32) ragende Aufhängeplatten (65) angebracht, die mit jeweils einem Schlittenkörper (56) verbunden sind, der im Führungskanal (43) verschiebbar gelagert ist und insbesondere mit zwei symmetrisch zur Vertikalebene (45) liegenden Gleitflächen (63, 64) auf den Führungsflächen (54, 55) gelagert ist ;
f) durch eine hydraulisch betätigbare Antriebsvorrichtung ist der Hauptquerträger (17) horizontal zwischen einer Ausfahrstellung und einer Fahrstellung verschiebbar;
**gekennzeichnet durch folgende Merkmale :**
g) die Führungsflächen (54, 55) des Führungskanals (43) jedes Führungsprofiles (32) sowie die Gleitflächen (63, 64) jedes Schlittenkörpers (56) sind zumindest bereichsweise in einem mit zunehmendem Abstand von der Vertikalebene (45) abfallenden Neigungswinkel ausgerichtet, derart, daß eine vertikal über die Aufhängeplatte (65) eingeleitete Kraft die beidseits des Eintrittsschlitzes (53) befindlichen Profilschenkel (46, 47) des Führungsprofiles (32) gegeneinander zieht.

2. Vorrichtung nach Anspruch 1, dadurch gekennzeichnet, daß der Führungskanal (43) einen im wesentlichen rechteckigen Querschnitt aufweist, wobei die Querschnittskanten der seitlichen Wandsektoren (49, 51) gerade und parallel zur Vertikalebene (45) ausgerichtet sind und die Querschnittskante des oberen Wandsektors (52) gerade und rechtwinkelig zur Vertikalebene (45) ausgerichtet ist und wobei die Querschnittskanten der Führungsflachen (54, 55) unmittelbar im Anschluß an den Eintrittsschlitz (53) gerade und in einem Neigungswinkel kleiner als 90° symmetrisch zur Vertikalebene (45) ausgerichtet sind.

3. Vorrichtung nach Anspruch 1, dadurch gekennzeichnet, daß das Führungsprofil (32) einen im wesentlichen rechteckigen Außenumriß aufweist, wobei die innere Seitenkante (38) und die äußere Seitenkante (39) parallel zur Vertikalebene (45) verlaufen.

4. Vorrichtung nach Anspruch 1, dadurch gekennzeichnet, daß das Führungsprofil (32) oberhalb des Führungskanals (43) einen randoffenen hinterschnittenen Längskanal (44) zur Aufnahme von Klemmschienen (72) zur Verankerung von Befestigungsschrauben (73) aufweist.

5. Vorrichtung nach Anspruch 4, dadurch gekennzeichnet, daß der Längskanal (44) symmetrisch zur Vertikalebene (45) und an der zum Eintrittsschlitz (53) gegenüberliegenden Oberseite des Führungsprofils (32) ausgebildet ist

6. Vorrichtung nach Anspruch 5, dadurch gekennzeichnet, daß der Längskanal (44) einen oberen Wandsektor aufweist, der durch einen randoffenen Schlitz (70) in zwei symmetrisch zur Vertikalebene (45) liegende Auflageflachen (67, 68) unterteilt ist, daß jede Klemmschiene (72) an den Auflageflachen anlegbare Klemmflachen (69, 71) aufweist und daß die Auflageflachen sowie die Klemmflachen zumindest bereichsweise in einem mit zunehmendem Abstand von der Vertikalebene (45) ansteigenden Keilwinkel ausgerichtet sind, derart, daß eine vertikal über eine Befestigungsschraube (73) eingeleitete Klemmkraft die beidseits des Schlitzes (70) befindlichen Profilbereiche (46, 47) des Führungsprofils (32) gegeneinander zieht.

7. Vorrichtung nach Anspruch 5, dadurch gekennzeichnet, daß das Führungsprofil (32) oberhalb des Längskanals (44) eine als Zylindermantelabschnitt konkav ausgebildete Oberfläche aufweist, deren Zylinderachse in der Vertikalebene (45) liegt.

8. Vorrichtung nach Anspruch 1, dadurch gekennzeichnet, daß das Führungsprofil (32) im Bereich der unteren Ausmündung des Eintrittsschlitzes (53) beidseits der Vertikalebene (45) angeordnete hinterschnittene Fassungsnuten (84, 85) zur Aufnahme von den Eintrittsschlitz (53) abdeckenden Dichtlippen aufweist.

9. Vorrichtung nach Anspruch 1, dadurch gekennzeichnet, daß am unteren Innenrand des Führungsprofils (32) eine nach unten ragende Leiste (86) angeformt ist, die eine untere, senkrecht zur Vertikalebene (45) ausgerichtete Leitfläche (87) und eine parallel zur Vertikalebene (45) ausgerichtete, von dieser wegweisende Anlagefläche (88) aufweist.

10. Vorrichtung nach Anspruch 1, dadurch gekennzeichnet, daß am unteren Außenrand des Führungsprofils (32) eine hinterschnittene Haltenut (97) für eine Vierkantmutter ausgebildet ist.

11. Vorrichtung nach Anspruch 1, dadurch gekennzeichnet, daß die zwei Führungsprofile (32) spiegelsymmetrisch zueinander angeordnet über zumindest zwei endseitig befestigte Quertraversen (95) rahmenartig verbunden sind.

12. Vorrichtung nach Anspruch 1, dadurch gekennzeichnet, daß die beiden Aufhängeplatten (65) spiegelsymmetrisch zueinander angeordnet über zumindest zwei Querstangen (96) rahmenartig verbunden sind.

13. Vorrichtung nach Anspruch 12, dadurch gekennzeichnet, daß drei nach Art eines Dreibeins an den Aufhängeplatten (65) verteilt angebrachte Querstangen (96) vorgesehen sind.

14. Vorrichtung nach Anspruch 9 und 11, dadurch gekennzeichnet, daß die Quertraversen (95) mit ihren gegenüberliegenden Enden zumindest mittelbar an den Anlageflächen (88) der Leisten (86) befestigt sind.

15. Vorrichtung nach Anspruch 12 und 14, dadurch gekennzeichnet, daß der Hauptquerträger (17) mit der daran gelagerten Faltbordwand (15) sowie mit den daran befestigten Aufhängeplatten (65) und den damit verbundenen Schlittenkörpern (56), die in den Führungskanälen (43) der Führungsschienen (32) gehalten werden, eine vormontierte, betriebsfertige Einheit bildet.

16. Vorrichtung nach Anspruch 1, dadurch gekennzeichnet, daß der Schlittenkörper (56) in der Seitenansicht eine etwa rechteckige Gestalt mit einem rückwärtigen stufenförmig abgesetzten Endbereich hat, wobei die untere horizontale Langsseite gerade ist und die Gleitflächen aufweist, die obere horizontale gerade Längsseite mit einem Teil ihrer Länge am oberen Wandsektor des Führungsprofils gleitend anliegt und die zur oberen Längsseite im wesentlichen senkrecht stehende Stufenfläche (98) gegen ein Anschlagelement (99) anlegbar ist, das im Führungsprofil (32), den Führungskanal (43) am rückwärtigen Ende querend gelagert ist.

17. Vorrichtung nach Anspruch 1, dadurch gekennzeichnet, daß der Schlittenkörper (56) in der Seitenansicht im zur Stufenfläche (98) gegenüberliegenden vorderen Endbereich eine im wesentlichen senkrecht stehende Anschlagfläche (101) aufweist, die gegen einen Anschlagbolzen (102) anlegbar ist, der im Führungsprofil (32), den Führungskanal (43) am vorderen Ende querend gelagert ist.

18. Vorrichtung nach Anspruch 1, dadurch gekennzeichnet, daß das rückwärtige Ende des Führungsprofils (32) in der Seitenansicht eine schräge Abschlußkante (37) aufweist, die vorzugsweise etwa 45° geneigt ist.

19. Vorrichtung nach Anspruch 9, dadurch gekennzeichnet, daß das rückwärtige Ende der Leiste (86) in der Seitenansicht eine Einlaufschräge (111) aufweist, die vorzugsweise etwa 15° gegenüber der Horizontalen geneigt ist.

20. Vorrichtung nach Anspruch 18 und 19, dadurch gekennzeichnet, daß die schräge Abschlußkante (37) und die Einlaufschräge (111) in der Seitenansicht einen spitzen Winkel miteinander einschließen und eine Spitze bilden.

21. Vorrichtung nach Anspruch 1, dadurch gekennzeichnet, daß das Führungsprofil (32) als Aluminium-Strangpreßprofil ausgebildet ist.

22. Vorrichtung nach Anspruch 1, dadurch gekennzeichnet, daß der Schlittenkörper (56) mit der einstückig daran angeformten Aufhängeplatte (65) als Aluminium-Strangpreßprofil ausgebildet ist.

23. Vorrichtung nach Anspruch 1, dadurch gekennzeichnet, daß am Schlittenkörper (56) Gleitzwischenlagen (57, 58, 59, 61, 63) angebracht sind, die an den Wandsektoren des Führungskanals (43) gleitend anlegen.

24. Vorrichtung für eine Faltbordwand nach Anspruch 1,
**dadurch gekennzeichnet**,
daß als Antriebsvorrichtung ein doppeltwirkender Hydraulikzylinder (103) vorgesehen ist, dessen Zylinder (104) den Hauptquerträger (17) horizontal querend damit verbunden ist und dessen Kolbenstange (105) über einen vertikalen Stützarm (106) mit den Führungsprofilen (32) verbunden ist und daß ein Gleichlaufgetriebe (91, 92, 93) vorgesehen ist zur synchronen Zwangsverschiebung der beiden Schlittenkörper (56) längs der beiden in der Seitenansicht deckungsgleich angeordneten Führungsprofile (32).

25. Vorrichtung nach Anspruch 24, dadurch gekennzeichnet, daß längs der Unterkante jedes Führungsprofiles (32) jeweils eine Zahnstange (91) angebracht ist, daß mit jeder Zahnstange ein Zahnrad (92) kämmt, das jeweils an der benachbarten Aufhängeplatte (65) drehbar gelagert ist und daß die beiden Zahnräder (92) über eine Horizontalwelle (93) drehstarr miteinander gekoppelt sind.

26. Vorrichtung nach Anspruch 9 und 25, dadurch gekennzeichnet, daß die Zahnstangen (91) jeweils an den Anlageflächen (88) der Leisten (86) angebracht sind, ohne nach unten über die Leitfläche (87) vorzustehen.

27. Vorrichtung nach Anspruch 12 und 25, dadurch gekennzeichnet, daß die Horizontalwelle (93) parallel zu den Querstangen (96) ausgerichtet ist.

28. Vorrichtung für eine Faltbordwand nach Anspruch 1 oder 24,
**dadurch gekennzeichnet**,
daß am Hauptquerträger (17) eine nach rückwärts abstehende Stütze (107) fest angebracht ist, an deren freiem Ende ein nach oben ragender Gummipuffer (108) angeordnet ist, der in der gefalteten Fahrstellung der Plattform etwa den Mittelbereich des Faltteils (31) der Plattform stützt,
daß an den beiden Seiten des Festteils (29) der Plattform in den vorderen Endbereichen jeweils nach oben ragende Führungsrollen (109) angebracht sind, die beim Einfahren der gefalteten und etwa horizontal ausgerichteten Plattform an nach unten weisenden, horizontalen und geraden Leitflächen (87) der Führungsprofile (32) entlangfahren.

29. Vorrichtung nach Anspruch 28, dadurch gekennzeichnet, daß zwischen dem freien Endbereich des Faltteiles (31) und dem gegenüberliegenden Festteil (29) der Plattform ein Gummipolster (112) angeordnet ist, daß am Festteil (29) in einer der Lage des Gummipolsters (112) entsprechenden Längsposition seitliche Stützrampen (113) nach oben abstehend angebracht sind, die an die Leitflächen (87) der Führungsprofile (32) anlegbar sind, daß an den Führungsprofilen (32) in einer vorgegebenen Position Nocken (114) angebracht sind, die nach unten über die Leitflächen (87) vorstehen, wobei die Position derart festgelegt ist, daß die Führungsrollen (109) in der Fahrstellung an den Nocken (114) abgestützt sind, wobei auch die Stützrampen (113) an den Leitflächen (87) anliegen und das Gummipolster (112) und der Gummipuffer (108) elastisch verspannt sind zum elastischen Festklemmen der eingefalteten Plattform in der Fahrstellung.

30. Vorrichtung nach Anspruch 9 und 28 oder 29, dadurch gekennzeichnet, daß die Leitflächen (87) der Leisten (86) beider Führungsprofile (32) zur Führung der Führungsrollen (109) vorgesehen sind.

## Claims

1. Arrangement for a folding platform gate (15) having the following known features:
a) in each case one link head (18) is fitted at the two end regions of a main crossmember (17);
b) four parallelogram links (22) are articulated pivotably on the two link heads (18) and, at the other end, retain a foldable platform such that the top side of the latter can be pivoted up to the top side of the base (13) of a vehicle body when the platform is in the opened-out, use position, and that, in the folded, travelling position, the platform can be stowed beneath the base (13);
c) above the end regions of the main crossmember (17), but between the link heads (18), two guide profiles (32) can be fitted beneath the base (13) of the vehicle body, the longitudinal axes of said profiles being aligned essentially horizontally and perpendicularly with respect to the main crossmember (17);
d) each guide profile (32) has a guide duct (43) with a bottom wall sector and an opposite, top wall sector (52) and two lateral wall sectors (49, 51) which are located opposite one another on both sides of a vertical plane, the bottom wall sector being subdivided, by an inlet slot (53) which is open at the bottom, into two guide surfaces (54, 55) which are located symmetrically with respect to the vertical plane (45);
e) fitted at the two end regions of the main crossmember (17), between the link heads (18), are two suspension plates (65) which project upwards through the inlet slot (53) of in each case one guide profile (32) and are connected in each case to one carriage body (56), which is mounted displaceably in the guide duct (43) and is mounted on the guide surfaces (54, 55), in particular, by way of two sliding surfaces (63, 64) which are located symmetrically with respect to the vertical plane (45);
f) a hydraulically actuable drive device can displace the main crossmember (17) horizontally between an extended position and a travelling position; characterized by the following features:
g) the guide surfaces (54, 55) of the guide duct (43) of each guide profile (32) as well as the sliding surfaces (63, 64) of each carriage body (56) are aligned, at least in some areas, at an angle of inclination which decreases as the distance from the vertical plane (45) increases, such that a force which is introduced vertically via the suspension plate (65) draws towards one another the profile legs (46, 47), located on both sides of the inlet slot (53), of the guide profile (32).

2. Arrangement according to Claim 1, characterized in that the guide duct (43) has an essentially rectangular cross-section, the cross-sectional edges of the lateral wall sectors (49, 51) being aligned in a rectilinear manner and parallel to the vertical plane (45), and the cross-sectional edge of the top wall sector (52) being aligned in a rectilinear manner and at right angles to the vertical plane (45), and the cross-sectional edges of the guide surfaces (54, 55), directly adjoining the inlet slot (53), being aligned in a rectilinear manner and at an angle of inclination of less than 90°, symmetrically with respect to the vertical plane (45).

3. Arrangement according to Claim 1, characterized in that the guide profile (32) has an essentially rectangular outline, the inner side edge (38) and the outer side edge (39) running parallel to the vertical plane (45).

4. Arrangement according to Claim 1, characterized in that, above the guide duct (43), the guide profile (32) has an open-border, undercut longitudinal duct (44) for receiving clamping rails (72) for anchoring fastening screws (73).

5. Arrangement according to Claim 4, characterized in that the longitudinal duct (44) is designed symmetrically with respect to the vertical plane (45) and on the top side of the guide profile (32), said top side being located opposite the inlet slot (53).

6. Arrangement according to Claim 5, characterized in that the longitudinal duct (44) has a top wall sector which is subdivided, by an open-border slot (70), into two bearing surfaces (67, 68) which are located symmetrically with respect to the vertical plane (45), in that each clamping rail (72) has clamping surfaces (69, 71) which can be positioned against the bearing surfaces, and in that the bearing surfaces and the clamping surfaces are aligned, at least in some areas, at a wedge angle which increases as the distance from the vertical plane (45) increases, such that a clamping force which is introduced vertically via a fastening screw (73) draws towards one another the profile regions (46, 47), located on both sides of the slot (70), of the guide profile (32).

7. Arrangement according to Claim 5, characterized in that, above the longitudinal duct (44), the guide profile (32) has a surface which is formed concavely as a section of a lateral surface of a cylinder and whose cylinder axis is located in the vertical plane (45).

8. Arrangement according to Claim 1, characterized in that, in the region of the bottom opening of the inlet slot (53), the guide profile (32) has undercut surround grooves (84, 85) which are arranged on both sides of the vertical plane (45) and are intended for receiving sealing lips which cover the inlet slot (53).

9. Arrangement according to Claim 1, characterized in that integrally formed on the bottom inner border of the guide profile (32) is a downwardly projecting strip (86) which has a bottom directing surface (87), which is aligned perpendicularly with respect to the vertical plane (45), and an abutment surface (88), which is aligned parallel to the vertical plane (45) and is oriented away from the latter.

10. Arrangement according to Claim 1, characterized in that an undercut retaining groove (97) for a square nut is formed on the bottom outer border of the guide profile (32).

11. Arrangement according to Claim 1, characterized in that the two guide profiles (32), arranged mirror-symmetrically with respect to one another, are connected in the manner of a frame via at least two cross-members (95) fastened at their ends.

12. Arrangement according to Claim 1, characterized in that the two suspension plates (65), arranged mirror-symmetrically with respect to one another, are connected in the manner of a frame via at least two transverse bars (96).

13. Arrangement according to Claim 12, characterized in that three transverse bars (96), distributed on the suspension plates (65) in the manner of a tripod, are provided.

14. Arrangement according to Claims 9 and 11, characterized in that the crossmembers (95) are fastened, by way of their opposite ends, at least indirectly on the abutment surfaces (88) of the strips (86).

15. Arrangement according to Claims 12 and 14, characterized in that the main crossmember (17), together with the folding platform gate (15) mounted thereon and with the suspension plates (65) fastened thereon as well as the carriage bodies (56), which are connected to said suspension plates and are retained in the guide ducts (43) of the guide rails (32), forms a preassembled unit which is ready for operation.

16. Arrangement according to Claim 1, characterized in that, in side view, the carriage body (56) is of an approximately rectangular configuration with a rear end region offset in step form, the bottom horizontal longitudinal side being rectilinear and exhibiting the sliding surfaces, the top horizontal, rectilinear longitudinal side butting in a sliding manner, with part of its length, against the top wall sector of the guide profile, and it being possible for the step surface (98), which is essentially perpendicular with respect to the top longitudinal side, to be positioned against a stop element (99) which, crossing the guide duct (43) at the rear end, is mounted in the guide profile (32).

17. Arrangement according to Claim 1, characterized in that, in side view, the carriage body (56) has in its front end region, which is located opposite the step surface (98), an essentially vertical stop surface (101) which can be positioned against a stop bolt (102) which, crossing the guide duct (43) at the front end, is mounted in the guide profile (32).

18. Arrangement according to Claim 1, characterized in that, in side view, the rear end of the guide profile (32) has an oblique termination edge (37) which is preferably inclined by approximately 45°.

19. Arrangement according to Claim 9, characterized in that, in side view, the rear end of the strip (86) has an inlet slope (111) which is preferably inclined by approximately 15° with respect to the horizontal.

20. Arrangement according to Claims 18 and 19, characterized in that, in side view, the oblique termination edge (37) and the inlet slope (111) enclose an acute angle with one another and form a point.

21. Arrangement according to Claim 1, characterized in that the guide profile (32) is designed as an extruded aluminium profile.

22. Arrangement according to Claim 1, characterized in that the carriage body (56) with the suspension plate (65) integrally formed thereon is designed as an extruded aluminium profile.

23. Arrangement according to Claim 1, characterized in that provided on the carriage body (56) are intermediate sliding layers (57, 58, 59, 61, 62) which butt in a sliding manner against the wall sectors of the guide duct (43).

24. Arrangement for a folding platform gate according to Claim 1, characterized in that provided as the drive device is a double-action hydraulic cylinder (103) whose cylinder (104), crossing the main crossmember (17) horizontally, is connected to the latter and whose piston rod (105) is connected to the guide profiles (32) via a vertical supporting arm (106), and in that a synchromesh gear mechanism (91, 92, 93) is provided for the purpose of synchronously forcing the two carriage bodies (56) along the two guide profiles (32), which are arranged congruently in side view.

25. Arrangement according to Claim 24, characterized in that in each case one rack (91) is fitted along the bottom edge of each guide profile (32), in that a gear wheel (92) meshes with each rack, said gear wheel being mounted rotatably in each case on the adjacent suspension plate (65), and in that the two gear wheels (92) are coupled to one another in a rotationally fixed manner via a horizontal shaft (93).

26. Arrangement according to Claims 9 and 25, characterized in that the racks (91) are fitted in each case on the abutment surfaces (88) of the strips (86) without projecting downwards beyond the directing surface (87).

27. Arrangement according to Claims 12 and 25, characterized in that the horizontal shaft (93) is aligned parallel to the transverse bars (96).

28. Arrangement for a folding platform gate according to Claim 1 or 24, characterized in that fixed on the main cross member (17) is a rearwardly projecting support (107), at the free end of which there is arranged an upwardly projecting rubber buffer (108) which, in the folded, travelling position of the platform, supports approximately the central region of the folding part (31) of the platform, in that fitted in each case on the two sides of the fixed part (29) of the platform, in the front end regions thereof, are upwardly projecting guide rollers (109) which, during retraction of the folded and approximately horizontally aligned platform, move along downwardly oriented, horizontal and rectilinear directing surfaces (87) of the guide profiles (32).

29. Arrangement according to Claim 28, characterized in that a rubber cushion (112) is arranged between the free end region of the folding part (31) of the platform and the opposite, fixed part (29) of the platform, in that lateral supporting ramps (113) are fitted in an upwardly projecting manner on the fixed part (29), in a longitudinal position which corresponds to the position of the rubber cushion (112), and can be positioned on the directing surfaces (87) of the guide profiles (32), in that protrusions (114) are fitted in a predetermined position on the guide profiles (32) and project downwards beyond the directing surfaces (87), the position being fixed such that, in the travelling position, the guide rollers (109) are supported on the protrusions (114), the supporting ramps (113) also butting against the directing surfaces (87), and the rubber cushion (112) and the rubber buffer (108) being braced elastically for the purpose of clamping the folded platform in an elastic manner in the travelling position.

30. Arrangement according to Claims 9 and 28 or 29, characterized in that the directing surfaces (87) of the strips (86) of the two guide profiles (32) are provided for the purpose of guiding the guide rollers (109).

## Revendications

1. Dispositif pour une ridelle pliante (15), **avec les caractéristiques connues suivantes**:
a) une tête d'articulation (18) est installée à chacune des deux zones d'extrémité d'une traverse principale (17);
b) aux deux têtes d'articulation (18) sont articulés, de façon pivotante, quatre parallélogrammes articulés (22), qui soutiennent à leur autre extrémité une plate-forme pliante, d'une façon telle que la face supérieure de celle-ci puisse être soulevée jusqu'à la face supérieure du fond (13) d'une superstructure de véhicule, lorsque la plate-forme est en position de travail dépliée, et que la plate-forme puisse, en position de roulage repliée, être logée en dessous du fond (13);
c) deux profilés de guidage (32), dont les axes longitudinaux sont orientés en direction essentiellement horizontale et perpendiculaire à la traverse principale (17), peuvent être placés en dessous du fond (13) de la superstructure de véhicule, au-dessus des zones d'extrémité de la traverse principale (17) mais cependant entre les têtes d'articulation (18);
d) chaque profilé de guidage (32) comporte un canal de guidage (43) avec une partie de paroi inférieure et une partie de paroi opposée supérieure (52), ainsi que deux parties de paroi latérales (49, 51) opposées l'une à l'autre de part et d'autre d'un plan vertical, dans lequel la partie de paroi inférieure est divisée, par une fente d'entrée (53) ouverte vers le bas, en deux surfaces de guidage (54, 55) disposées symétriquement par rapport au plan vertical (45);
e) aux deux zones d'extrémité de la traverse principale (17) sont placées, entre les têtes d'articulation (18), deux plaques de suspension (65) orientées vers le haut respectivement à travers la fente d'entrée (53) d'un profilé de guidage (32), qui sont respectivement assemblées à un corps coulissant (56), qui est supporté de façon coulissante dans le canal de guidage (43) et qui est supporté en particulier sur les surfaces de guidage (54, 55) avec deux surfaces de glissement (63, 64) disposées symétriquement par rapport au plan vertical (45);
f) la traverse principale (17) peut être déplacée horizontalement, par un dispositif de manoeuvre à commande hydraulique, entre une position déployée et une position de roulage;
**caractérisé par les caractéristiques suivantes**:
g) les surfaces de guidage (54, 55) du canal de guidage (43) de chaque profilé de guidage (32) ainsi que les surfaces de glissement (63, 64) de chaque corps coulissant (56) sont, au moins par zones, orientées avec un angle d'inclinaison descendant à mesure que l'on s'écarte du plan vertical (45), de telle façon qu'une force introduite verticalement par la plaque de suspension (65) tire l'un vers l'autre les flancs profilés (46, 47) du profilé de guidage (32) se trouvant de part et d'autre de la fente d'entrée (53).

2. Dispositif suivant la revendication 1, caractérisé en ce que le canal de guidage (43) présente une section transversale sensiblement rectangulaire, dans laquelle les arêtes de la section transversale des parties de paroi latérales (49, 51) sont rectilignes et orientées parallèlement au plan vertical (45) et l'arête de la section transversale de la partie de paroi supérieure (52) est rectiligne et orientée perpendiculairement au plan vertical (45) et dans laquelle les arêtes de la section transversale des surfaces de guidage (54, 55), directement à leur raccordement à la fente d'entrée (53), sont rectilignes et orientées avec un angle d'inclinaison inférieur à 90° symétriquement par rapport au plan vertical (45).

3. Dispositif suivant la revendication 1, caractérisé en ce que le profilé de guidage (32) présente un contour extérieur sensiblement rectangulaire, dans lequel l'arête latérale intérieure (38) et l'arête latérale extérieure (39) sont parallèles au plan vertical (45).

4. Dispositif suivant la revendication 1, caractérisé en ce que le profilé de guidage (32) présente, au-dessus du canal de guidage (43), un canal longitudinal (44) taillé en contre-dépouille, ouvert vers la périphérie, destiné à recevoir des rails de serrage (72) pour l'ancrage de vis de fixation (73).

5. Dispositif suivant la revendication 4, caractérisé en ce que le canal longitudinal (44) est symétrique par rapport au plan vertical (45) et est formé dans la face supérieure du profilé de guidage (32) située à l'opposé de la fente d'entrée (53).

6. Dispositif suivant la revendication 5, caractérisé en ce que le canal longitudinal (44) présente une partie de paroi supérieure, qui est divisée en deux surfaces d'appui (67, 68) disposées symétriquement par rapport au plan vertical (45) par une fente (70) ouverte vers la périphérie, en ce que chaque rail de serrage (72) présente des surfaces de serrage (69, 71) applicables sur les surfaces d'appui et en ce que les surfaces d'appui ainsi que les surfaces de serrage sont, au moins par zones, orientées avec un angle de coin montant à mesure que l'on s'écarte du plan vertical (45), d'une façon telle qu'une force de serrage introduite verticalement par une vis de fixation (73) tire l'une vers l'autre les zones profilées (46, 47) du profilé de guidage (32) se trouvant de part et d'autre de la fente (70).

7. Dispositif suivant la revendication 5, caractérisé en ce que le profilé de guidage (32) présente, au-dessus du canal longitudinal (44), une surface concave formant une portion d'une surface latérale cylindrique, dont l'axe du cylindre se trouve dans le plan vertical (45).

8. Dispositif suivant la revendication 1, caractérisé en ce que le profilé de guidage (32) présente, dans la zone du débouché inférieur de la fente d'entrée (53), des rainures de maintien (84, 85) taillées en contre-dépouille, disposées de part et d'autre du plan vertical (45), destinées à recevoir des lèvres d'étanchéité couvrant la fente d'entrée (53).

9. Dispositif suivant la revendication 1, caractérisé en ce qu'au bord intérieur inférieur du profilé de guidage (32) est formée une nervure (86) dirigée vers le bas, qui présente une surface de guidage inférieure (87), orientée perpendiculairement au plan vertical (45), et une surface d'appui (88), orientée parallèlement au plan vertical (45) à l'opposé de celui-ci.

10. Dispositif suivant la revendication 1, caractérisé en ce qu'au bord extérieur inférieur du profilé de guidage (32) est formée une rainure de maintien (97), taillée en contre-dépouille, pour un écrou carré.

11. Dispositif suivant la revendication 1, caractérisé en ce que les deux profilés de guidage (32), disposés symétriquement l'un par rapport à l'autre, sont assemblés en un cadre par au moins deux traverses transversales (95) fixées à leurs extrémités.

12. Dispositif suivant la revendication 1, caractérisé en ce que les deux plaques de suspension (65), disposées symétriquement l'une par rapport à l'autre, sont assemblées en un cadre par au moins deux barres transversales (96).

13. Dispositif suivant la revendication 12, caractérisé en ce qu'il est prévu trois barres transversales (96) montées aux plaques de suspension (65), avec une répartition à la manière d'un trépied.

14. Dispositif suivant la revendication 9 et 11, caractérisé en ce que les traverses transversales (95) sont fixées avec leurs extrémités opposées au moins indirectement aux surfaces d'appui (88) des nervures (86).

15. Dispositif suivant la revendication 12 et 14, caractérisé en ce que la traverse principale (17) forme une unité prémontée, prête à l'emploi, avec la ridelle pliante (15) qui y est supportée ainsi qu'avec les plaques de suspension (65) qui y sont fixées et avec les corps coulissants (56) qui y sont assemblés, qui sont maintenus dans les canaux de guidage (43) des rails de guidage (32).

16. Dispositif suivant la revendication 1, caractérisé en ce que le corps coulissant (56) présente, en vue latérale, une configuration sensiblement rectangulaire avec une zone d'extrémité déportée en gradin à l'arrière, dans laquelle la face longitudinale horizontale inférieure est rectiligne et présente les surfaces de glissement, la face longitudinale horizontale rectiligne supérieure repose, par une partie de sa longueur, en glissant sur la partie de paroi supérieure du profilé de guidage et la surface de gradin (98) sensiblement perpendiculaire à la face longitudinale supérieure peut être appliquée contre un élément de butée (99), qui est posé dans le profilé de guidage (32), en travers du canal de guidage (43) à son extrémité arrière.

17. Dispositif suivant la revendication 1, caractérisé en ce que le corps coulissant (56) présente, en vue latérale, dans sa zone d'extrémité avant à l'opposé de la surface de gradin (98), une surface de butée sensiblement verticale (101), qui peut être appliquée contre un boulon de butée (102), qui est posé dans le profilé de guidage (32), en travers du canal de guidage (43) à son extrémité avant.

18. Dispositif suivant la revendication 1, caractérisé en ce que l'extrémité arrière du profilé de guidage (32) présente, en vue latérale, une arête terminale oblique (37), qui est inclinée de préférence d'environ 45°.

19. Dispositif suivant la revendication 9, caractérisé en ce que l'extrémité arrière de la nervure (86) présente, en vue latérale, un biseau d'entrée (111), qui est incliné de préférence d'environ 15° par rapport à l'horizontale.

20. Dispositif suivant la revendication 18 et 19, caractérisé en ce que l'arête terminale oblique (37) et le biseau d'entrée (111) font, en vue latérale, un angle aigu l'un avec l'autre et forment une pointe.

21. Dispositif suivant la revendication 1, caractérisé en ce que le profilé de guidage (32) est constitué par un profilé en aluminium extrudé.

22. Dispositif suivant la revendication 1, caractérisé en ce que le corps coulissant (56) formé d'une seule pièce avec la plaque de suspension (65) est constitué par un profilé en aluminium extrudé.

23. Dispositif suivant la revendication 1, caractérisé en ce que des couches de glissement intermédiaires (57, 58, 59, 61, 63), qui s'appliquent en glissant sur les parties de paroi du canal de guidage (43), sont placées sur le corps coulissant (56).

24. Dispositif pour une ridelle pliante suivant la revendication 1, caractérisé en ce qu'il est prévu, comme dispositif d'entraînement, un vérin hydraulique à double action (103), dont le cylindre (104) est relié à la traverse principale (17) transversalement à celle-ci en position horizontale et dont la tige de piston (105) est reliée aux profilés de guidage (32) par un bras de support vertical (106), et en ce qu'il est prévu une transmission homocinétique (91, 92, 93) pour le déplacement synchrone forcé des deux corps coulissants (56) le long des deux profilés de guidage (32), qui se recouvrent entièrement en vue latérale.

25. Dispositif suivant la revendication 24, caractérisé en ce qu'une crémaillère (91) est placée le long de l'arête inférieure de chaque profilé de guidage (32), en ce qu'avec chaque crémaillère engrène une roue dentée (92), qui est supportée de façon rotative dans la plaque de suspension voisine (65) et en ce que les deux roues dentées (92) sont couplées l'une à l'autre, en étant calées en rotation, par un arbre horizontal (93).

26. Dispositif suivant la revendication 9 et 25, caractérisé en ce que les crémaillères (91) sont placées sur les surfaces d'appui (88) des nervures (86) respectives, sans s'étendre vers le bas au-delà de la surface de guidage (87).

27. Dispositif suivant la revendication 12 et 25, caractérisé en ce que l'arbre horizontal (93) est orienté parallèlement aux barres transversales (96).

28. Dispositif pour une ridelle pliante suivant la revendication 1 ou 24, caractérisé en ce qu'à la traverse principale (17) est fixé un support (107) saillant vers l'arrière, à l'extrémité libre duquel est disposé un amortisseur de caoutchouc (108) dirigé vers le haut qui, en position de roulage repliée de la plate-forme, supporte sensiblement la zone centrale de la partie pliante (31) de la plate-forme, en ce que sur les deux côtés de la partie fixe (29) de la plate-forme, dans les zones d'extrémité avant, sont placés des galets de guidage (109) dirigés vers le haut qui, lors de la rentrée de la plate-forme repliée et orientée sensiblement à l'horizontale, roulent le long de surfaces de guidage (87) rectilignes, horizontales et tournées vers le bas, des profilés de guidage (32).

29. Dispositif suivant la revendication 28, caractérisé en ce qu'un coussin de caoutchouc (112) est disposé entre la zone d'extrémité libre de la partie pliante (31) et la partie fixe opposée (29) de la plate-forme, en ce que sur la partie fixe (29), dans une position longitudinale correspondant à la position du coussin de caoutchouc (112), sont placées des rampes de support latérales (113) saillantes vers le haut, qui peuvent être appliquées contre les surfaces de guidage (87) des profilés de guidage (32), en ce qu'en une position prédéterminée sur les profilés de guidage (32) sont placées des cames (114), qui sont saillantes vers le bas au-delà des surfaces de guidage (87), leur position étant déterminée de telle façon que les galets de guidage (109) soient supportés sur les cames (114) dans la position de roulage, les rampes de support (113) étant également appliquées sur les surfaces de guidage (87) et le coussin de caoutchouc (112) ainsi que l'amortisseur de caoutchouc (108) étant élastiquement écrasés pour le serrage élastique de la plate-forme repliée dans la position de roulage.

30. Dispositif suivant la revendication 9 et 28 ou 29, caractérisé en ce que les surfaces de guidage (87) des nervures (86) des deux profilés de guidage (32) sont prévues pour le guidage des galets de guidage (109).
